# EUROPÄISCHE PATENTSCHRIFT

(11) **EP 2 233 545 B1**
(45) Veröffentlichungstag und Bekanntmachung des Hinweises auf die Patenterteilung: **28.03.2012**
(21) Anmeldenummer: 10006945.9
(22) Anmeldetag: 18.04.2007
(51) Int. Cl.: C09J 7/00

(54) **Verfahren zur Herstellung eines modifizierten polymeren Kunststoffes und Verwendung eines nach diesem Verfahren hergestellten Kunststoffes**
Method for producing a modified polymer plastic and use of a plastic produced according to the method
Procédé de fabrication d'une matière synthétique polymère modifiée et utilisation d'une matière synthétique fabriquée selon ce procédé

(30) Priorität: 26.04.2006 DE 102006020111
(43) Veröffentlichungstag der Anmeldung: 29.09.2010
(62) Teilanmeldung aus: 07007852.2
(73) Patentinhaber: Innovent e.V., 07745 Jena (DE)
(72) Erfinder: Heft, Andreas, 07545 Gera (DE); Pfuch, Andreas, 99510 Apolda (DE); Schimanski, Arndt, 44329 Dortmund (DE); Grünler, Bernd, 07937 Zeulenroda (DE)
(74) Vertreter: Donath, Dirk

(56) Entgegenhaltungen:
- EP-A1- 0 094 121
- US-A- 4 942 119

## Beschreibung

Bestimmte nanostrukturierte Materialien, zum Beispiel Zeolithe, besitzen die Eigenschaft, kleinere Moleküle in sich aufzunehmen. Damit eignen sie sich hervorragend als Adsorptionsmittel. Sie können so synthetisiert werden, dass ihre Hohlräume und Zugangsöffnungen einen vorher definierten Durchmesser besitzen, durch welche dann nur Moleküle mit passender Struktur und Gestalt eindringen können, um daraufhin in den Hohlräumen durch elektrostatische oder von-der-Waals-Kräfte festgehalten zu werden. Die Moleküle, die sich im Inneren der Hohlräume befinden, können zum Beispiel Farbstoffmoleküle, im speziellen organische und photo aktiviert schaltbare Farbstoffmoleküle sein, welche innerhalb der Nanozeolithe synthetisiert oder in sie eingebracht werden.

Die Aufgabe der vorliegenden Erfindung besteht darin, ein Verfahren zur Herstellung eines modifizierten polymeren Kunststoffes anzugeben, der im sichtbaren Bereich des elektromagnetischen Spektrums zunächst transparent ist und nach Bestrahlung mittels UV-Licht bzw. kurzwelligen sichtbaren Lichtes wellenlängenabhängig deutliche Transmissionsverringerungen aufweist.

Darüber hinaus soll die Verwendung eines nach diesem Verfahren hergestellten Kunststoffes angegeben werden.

Diese Aufgaben werden durch ein Verfahren gemäß Anspruch 1 und eine Verwendung gemäß Anspruch 5 gelöst. Vorteilhafte Ausgestaltungen werden in den nachgeordneten Ansprüchen angegeben.

Durch das erfindungsgemäße Einbringen von derartigen Nanozeolithen, die sich dadurch auszeichnen, dass sich in den beschriebenen Nanoteilchen organische photoaktiviert schaltbare Farbstoffmoleküle befinden, in eine im sichtbaren Wellenlängenbereich bevorzugt transparente Kunststoffmatrix lassen sich photochrom schaltbare Kunststoffe herstellen.

Diese können als Folien, als planare Substrate oder in komplexeren Formen weitere Verwendung finden.

Bisher existieren verschiedene Ansätze zu Herstellung schaltbarer Glasscheiben (elektrochrom, photochrom, photoelektrochrom, gasochrom, thermotrop). Diese sind jedoch trotz langwieriger und intensiver Entwicklungsarbeiten bisher nicht zur Marktreife gebracht worden. Ursache dafür sind die unzureichende Lösung grundlegender Fragen, wie die Komplexizität der Schichtaufbauten insbesondere bei großflächigen Systemen (elektrochrom, photoelektrochrom), bestehende Probleme hinsichtlich der Steuerung (gasochrom) oder auch nicht ausreichende Schaltzeiten und Temperatureinflüsse. Insbesondere für (Wolframoxid-basierte) photochrome Systeme werden verschiedene Umstände wie die starke Temperaturabhängigkeit der Ein- bzw. Entfärbung, mangelnde Langzeitstabilität, hoher Absorptionsgrad im abgedunkelten Zustand und hohe Preise als Umstände angeführt, welche den Einsatz großformatiger Gläser in der Architektur verhindern. Die Herstellung der f-NZ-modifizierten Folien (f-NZ = farbstoffmodifizierte Nanozeolithe) und das Laminieren sind dagegen sehr preiswerte Verfahren. Durch Variationen des f-NZ-Gehalts in den Folien wird die Transmissionsänderung durch Bestrahlung gezielt eingestellt und damit die Schaltungsleistung der Scheiben definiert. Da die Folien typischen Dicken von einigen hundert Mikrometern und mehr aufweisen, stellt auch eine mögliche elektrische Kontaktierung von Folienverbünden kein Problem dar.

Erfindungsgemäß werden Kunststoffe, welche vorzugsweise transparent sind, mit einem Anteil an farbstoffmodifizierten Nanozeolithen (f-NZ) modifiziert, um daraus Folien herzustellen. Dies geschieht bspw. durch das Extrudieren von Granulaten oder Pulvern mit den entsprechenden Zusätzen an f-NZ, wobei der Gewichtsanteil der f-NZ typischerweise unter 30% liegt, vorzugsweise werden Anteile von weniger als 20% eingebracht. Durch Bestrahlung derartig hergestellter Folien mittels kurzwelligen sichtbaren Lichtes oder UV-Lichtes kann die Transmission wellenlängenabhängig reduziert werden. Erfindungsgemäß kann die Folienherstellung auch durch einen Koextrusionsprozess verschiedener Kunststoffmaterialien erfolgen, wobei dem Granulat oder dem Pulver mindestens eines der verwendeten Kunststoffe Anteile von f-NZ zugesetzt werden.

Erfindungsgemäß können derartig hergestellte Folien auf gebräuchliche Folien auflaminiert werden, die in der späteren Verwendung als Laminierfolien für Verbundsicherheitsglas dienen.

Die Verwendung der so hergestellten, mit f-NZ modifizierten Folien zum Laminieren von Gläsern und Kunststoffplatten stellt eine erfindungsgemäße Anwendung dar. Dabei werden sowohl Verbundgläser, bei denen zwei oder mehrere Scheiben mit dazwischen liegenden Folien laminiert werden (Verbundsicherheitsglas, VSG) als auch oberflächlich laminierte Gläser oder Kunststoffplatten hergestellt.

Damit ist eine Funktionalisierung des Glases bzw. Glasverbundes oder von Kunststoffplatten möglich, welche mit den bisher eingesetzten CVD- und PVD-Beschichtungstechnologien nicht oder nur mit deutlich höherem Aufwand realisiert werden können.

Insbesondere werden Polyvinylbutyral- (PVB-) Folien mit den f-NZ modifiziert, da dieser Kunststoff in der Herstellung von Verbundgläsern nahezu ausschließlich verwendet wird. Dort, wo die Sicherheitsanforderungen an das Verbundglas die Verwendung der PVB-Folien nicht zwingend erforderlich machen, sind auch andere f-NZmodifizierte Kunststoffe einsetzbar.

Kern der Erfindung ist ein modifizierter polymerer Kunststoff, dadurch gekennzeichnet, dass in die Polymermatrix eine Menge von wenigen Massenprozent (≤ 30%), bevorzugt von weniger als 20%, an f-NZ derart eingebracht werden, dass daraus hergestellte Folien erfindungsgemäß im sichtbaren Bereich des elektromagnetischen Spektrums zunächst transparent sind und nach Bestrahlung mittels UV-Licht bzw. kurzwelligen sichtbaren Lichtes (Tageslicht) wellenlängenabhängig deutliche Transmissionsverringerungen aufweisen. Die Dicke dieser Folien liegt im Bereich von 1µm bis hin zu einigen Millimetern, wobei dickere Folien auch durch Laminieren mehrerer dünnerer Folien erzeugt werden. Als Materialien für die Folien werden alle thermoplastisch verformbaren Polymerstoffe verwendet, bevorzugt solche mit guter Laminierfähigkeit und hoher Festigkeit wie PVB.

Um die Langzeitstabilität der Farbstoffmoleküle zu erhöhen bzw. um die f-NZ besser in die Polymermatrix einbinden zu können, werden diese entsprechend gekapselt bzw, vorbehandelt. Dies geschieht mit Verfahren der physikalischen und/oder chemischen Gasphasenabscheidung (PVD, CVD), Sol-Gel-Prozessen und anderen Verfahren der Flüssigphasenbeschichtung. Diese Vorbehandlung findet entweder unter Atmosphärendruckbedingungen statt oder unter Vakuumbedingungen. Dies schließt auch Verfahren wie die flammengestützte Pyrolyse (CCVD) und die flammengestützte Hydrolyse (r-CCVD) ein. Die Vorbehandlung erfolgt auch mit Stoffen, welche die Elemente Silizium, Titan, Aluminium, Zinn, Wolfram, Tantal, Cer, Molybdän, Zink, Zirkon, Silber, Niob, Indium, Arsen, Selen, Antimon, Fluor und Chlor enthalten sowie mit Sauerstoff, Stickstoff, Argon, Wasserstoff, Chlor und Fluor oder Gemischen aus diesen Gasen.

Erfindungsgemäß werden die mit f-NZ modifizierten Polymere als komplexe Körper (z. B. Behälter), die bspw. durch Spritzguss hergestellt wurden, selbst weiterverarbeitet oder auf ein Substrat, welches aus Glas in jedweder Form und Zusammensetzung oder aus einem transparenten Kunststoff jedweder Form und Zusammensetzung besteht, aufgebracht. Bevorzugt werden flache Substrate wie Floatglasscheiben oder Kunststoffplatten bzw. -folien oder Hohlkörper aus Glas oder Kunststoff. Das Aufbringen der modifizierten Polymere erfolgt durch alle gängigen Auftragstechniken, insbesondere durch Aufextrudieren, Aufblasen oder Auflaminieren.

Für den Aufbau von Verbunden werden einzelne oder mehrere modifizierte Polymerfolien zwischen zwei Substraten laminiert. Der Aufbau aus mehreren Abfolgen von Substraten und modifizierten Folien ist ebenso erfindungsgemäß wie die Abfolge mehrerer Folien mit unterschiedlichen Modifikationen (z. B. Folien mit elektrischer Leitfähigkeit und schaltbarer Transmission) innerhalb eines solchen Verbundes.

### Ausführungsbeispiel 1

Einbringen von oberflächenvorbehandelten f-NZ in Polyethylen (PE) dadurch, dass PE-Pulver (mittlere Korngröße ca. 300 µm) mit 0,5 Massen % f-NZ vermischt und anschließend bei Temperaturen nicht höher als 250°C extrudiert wurde. Dabei wurde eine Folie erzeugt, welche klar und transparent ist. Bei heller Lichtbestrahlung erfolgt eine deutlich wahrnehmbare Einfärbung dieser Folie.

### Ausführungsbeispiel 2

Einbringen von oberflächenvorbehandelten f-NZ in Polyvinylbutyral (PVB) dadurch, dass PVB in Isopropanol gelöst wurde und diese Lösung mit 0,5 Massen % f-NZ versetzt wurde. Durch Aufbringen dieser Lösung auf eine Glasscheibe und das anschließende Aufbringen einer weiteren Glasscheibe nach dem Eintrocknen dieser Lösung wurde unter Druck und bei ca. 130°C ein Verbundglas hergestellt, bei dem sich die schaltbare Polymerschicht als dünne Folie zwischen den beiden Glasplatten befindet und dadurch zusätzlich vor schädlichen Umwelteinflüssen geschützt ist.

Alle in der Beschreibung, den nachfolgenden Ausführungsbeispielen und Ansprüchen dargestellten Merkmale können sowohl einzeln als auch in beliebiger Kombination miteinander erfindungswesentlich sein.

## Patentansprüche

1. Verfahren zur Herstellung eines modifizierten polymeren Kunststoffes, bei dem ein transparenter Kunststoff in Form von Polyvinylbutyral oder Polyethylen in Granulat- oder Pulverform mit einem Anteil an farbstoffmodifizierten Nanozeolithen ≤ 30 Massenprozent versetzt wird und durch Extrudieren in Folienform überführt wird.

2. Verfahren gemäß Anspruch 5, **dadurch gekennzeichnet, dass** die eingesetzten farbstoffmodifizierten Nanozeolithen oberflächenvorbehandelt sind.

3. Verfahren gemäß Anspruch 6, **dadurch gekennzeichnet, dass** die Oberflächenvorbehandlung mit Verfahren der physikalischen und/oder chemischen Gasphasenabscheidung, Sol-Gel-Prozessen oder anderen Verfahren der Flüssigphasenbeschichtung oder flammengestützte Pyrolyse (CCVD) bzw. flammengestützte Hydrolyse erfolgt.

4. Verfahren gemäß Anspruch 7, **dadurch gekennzeichnet, dass** das Extrudieren bei Temperaturen nicht höher als 250°C erfolgt.

5. Verwendung des modifizierten polymeren Kunststoffs hergestellt durch ein Verfahren gemäß einem oder mehrerer der Ansprüche 1 bis 4 zum Aufbau von Verbunden, bei denen einzelne oder mehrere modifizierte Polymerfolien zwischen zwei Substraten laminiert sind.

6. Verwendung gemäß Anspruch 5, **dadurch gekennzeichnet, dass** die Substrate Glas sind.

7. Verwendung gemäß Anspruch 5, **dadurch gekennzeichnet, dass** die Substrate Kunststoff sind.

8. Verwendung gemäß Anspruch 5, **dadurch gekennzeichnet, dass** die Substrate Verbünde aus Glas und Kunststoff sind.

## Claims

1. Method for producing a modified polymer plastic for which a proportion of color-modified nanozeolites ≤ 30 weight by weight is added to a transparent plastic of polyvinylbutyral or polyethylene in granulate or powder form and this compound is transferred into film form by extrusion.

2. Method according to claim 5, wherein the surface of the added color-modified nanozeolites are pretreated.

3. Method according to claim 6, wherein the surface is pretreated by methods of physical and/or chemical vapor deposition, sol-gel processes or other methods of liquid phase coating or flame-assisted pyrolysis (CCVD) or flame-assited hydrolysis.

4. Method according to claim 7, wherein the extrusion is carried out at temperatures not higher than 250°C.

5. Use of the modified polymer plastic produced by a method according to one or several of the claims 1 through 4 for creating composite structures in which single or several modified polymer films are laminated between two substrates.

6. Use according to claim 5, wherein the substrates are glass.

7. Use according to claim 5, wherein the substrates are plastic.

8. Use according to claim 5, wherein the substrates are composites of glass and plastic.

## Revendications

1. Procédé pour la production d'un plastique en polymère modifié, pour lequel une matière plastique transparente en butyral polyvinylique ou polyéthylène sous forme de granulé ou poudre est mélangée avec une portion des nanozéolithes modifiées à colorant de ≤ 30 pour cents en masse et est transformée en forme de feuille au moyen de l'extrusion.

2. Procédé suivant la revendication 5 est **caractérisé en ce que** les surfaces des nanozéolithes modifiées par colorant utilisées sont prétraitées.

3. Procédé suivant la revendication 6 est **caractérisé en ce que** le prétraitement de surface s'effectue à l'aide des procédés de la séparation chimique et/ou physique en phase gazeuse, des procédés sol-gel et d'autres procédés de revêtement en phase liquide ou la pyrolyse à la flamme (CCVD) et/ou la hydrolyse à la flamme.

4. Procédé suivant la revendication 7 est **caractérisé en ce que** l'extrusion s'effectue à des températures qui n'excèdent pas les 250°C.

5. Utilisation du plastique en polymère modifié produit à l'aide d'un procédé suivant une ou plusieurs des revendications 1 à 4 pour fabriquer des matériaux composites, pour lesquels une ou plusieurs feuilles polymères modifiées sont laminées entre deux substrats.

6. Utilisation selon la revendication 5 est **caractérisée en ce que** les substrats sont verre.

7. Utilisation selon la revendication 5 est **caractérisée en ce que** les substrats sont matière plastique.

8. Utilisation selon la revendication 5 est **caractérisée en ce que** les substrats sont matériaux composites formés de verre et matière plastique.
